# FASCICULE DE BREVET EUROPEEN

(11) **EP 1 674 030 B1**
(45) Date de publication et mention de la délivrance du brevet: **16.07.2008**
(21) Numéro de dépôt: 05112282.8
(22) Date de dépôt: 16.12.2005
(51) Int. Cl.: A47L 15/48

(54) **Lave-vaisselle et procédé de mise en oeuvre du séchage de la vaisselle dans ce lave-vaisselle**
Geschirrspülmaschine und Verfahren zum Trocknen des Geschirrs in dieser Geschirrspülmaschine
Dishwasher and method for drying the dishes in this dishwasher

(30) Priorité: 21.12.2004 FR 0413691
(43) Date de publication de la demande: 28.06.2006
(73) Titulaire: Brandt Industries, 92500 Rueil Malmaison (FR)
(72) Inventeur: Ni, Bo, 85170 Les Lucs Sur Boulogne (FR)

(56) Documents cités:
- EP-A- 0 358 279
- CH-A5- 690 354
- DE-A1- 2 016 831
- DE-A1- 3 626 887

## Description

La présente invention concerne une machine à laver et sécher la vaisselle.

Elle concerne également un procédé de séchage de vaisselle mis en oeuvre dans une telle machine à laver et sécher la vaisselle.

De manière générale, cette invention concerne les lave-vaisselle dans lesquels un cycle de lavage d'une quantité de vaisselle est suivi d'un cycle de séchage de cette vaisselle.

Elle concerne tant les lave-vaisselle encastrés que posables.

La vaisselle destinée à être lavée est placée dans au moins un panier supporté par l'enceinte de lavage qui comporte une ouverture de sortie généralement ménagée dans la sole de l'enceinte de lavage pour permettre la circulation de l'eau lors des différents cycles de lavage de la vaisselle.

Un moyen de chauffage du bain est placé dans le circuit de traitement de l'eau du bain de lavage.

Parallèlement, au circuit de lavage de la vaisselle, cette machine à laver et sécher la vaisselle est connectée à un circuit ouvert de traitement de l'air chargé en humidité. Ce circuit de traitement de l'air comporte généralement une conduite de circulation d'air en communication avec l'enceinte de lavage dans laquelle est placée la vaisselle. L'enceinte de lavage constitue ainsi un des éléments de ce circuit de traitement de l'air de séchage.

Traditionnellement, au moins un ventilateur est monté dans le circuit de traitement de l'air, et destiné à faire circuler ledit air entre une ouverture de captage et une ouverture d'évacuation ménagées dans l'enceinte de lavage, ledit circuit comportant aussi une ouverture d'entrée d'air au travers du boîtier pour introduire de l'air de l'ambiance, et un moyen d'assèchement de l'air à traiter comprenant une chambre.

Dans les machines de l'art antérieur, l'air traverse l'enceinte de lavage et sort par l'ouverture de captage de l'air ménagée dans la voûte de l'enceinte de lavage pour être aspiré dans le circuit de traitement de l'air.

Afin d'amener l'air de séchage dans l'enceinte de lavage, le circuit de traitement de l'air comprend une ouverture d'évacuation d'air de séchage débouchant au niveau d'un flanc de l'enceinte de lavage.

Dans une machine à laver et sécher la vaisselle, l'ouverture d'évacuation du circuit de traitement de l'air est située par exemple sur le fond de l'enceinte de lavage.

Généralement, cette ouverture de captage de l'air est disposée dans une zone de l'enceinte de lavage éloignée et sur un autre flanc de l'enceinte de la zone où l'air d'évacuation du circuit de traitement de l'air est introduit dans l'enceinte de lavage.

Afin de réaliser ce cycle de séchage de la vaisselle dans la cuve de lavage du lave-vaisselle, il existe trois types de séchage de la vaisselle.

Un premier moyen de séchage de la vaisselle consiste à sécher par convection naturelle à l'aide de résistances électriques chauffantes montées sur le fond de la cuve de lavage de la machine ou dans le circuit de traitement de l'eau du bain de lavage.

Ce type de solution présente les inconvénients de ne pas être économique en énergie.

Une deuxième solution consiste à sécher la vaisselle à l'aide d'un condenseur réalisé dans l'enceinte de lavage. Il est alors nécessaire pour évaporer l'eau en contact avec la vaisselle de faire circuler un rideau d'eau froide le long d'au moins une des parois de l'enceinte de lavage. Ce procédé est complexe à mettre en oeuvre et coûteux. De plus, il n'assure pas l'obtention de la meilleure performance de séchage.

Un troisième moyen de séchage consiste à sécher la vaisselle par convection forcée à l'aide d'un ventilateur monté sur la structure du lave-vaisselle. Il est alors nécessaire de prévoir des conduites de ventilation permettant de relier l'enceinte de lavage et un échangeur air - eau placé à l'extérieur de ladite enceinte de lavage.

Ce type de solution présente cependant les inconvénients liés à la présence du ventilateur et de l'échangeur air - eau, encombrants, générateur de bruit pour ledit ventilateur et coûteux.

L'utilisation du flux d'air de séchage n'est pas optimisée de tette sorte que les lave-vaisselle de l'état de la technique présentent une consommation énergétique élevée associée dans les deux solutions présentées à une consommation d'eau au niveau du condenseur ou de l'échangeur air - eau importante.

Ces consommations énergétiques élevées s'expliquent par le fait qu'il est nécessaire d'avoir une température de séchage élevée pour obtenir un séchage correct de la vaisselle.

Le document EP0358279, décrit un dispositif de séchage pour un lave-vaisselle constitué d'un cylindre creux à double paroi qui est rempli d'un produit desséchant et dans lequel va circuler l'air humide lors de la phase de séchage de la vaisselle. Ce cylindre est placé autour du chauffe-eau instantané composé d'un tube d'écoulement et d'un élément chauffant. L'objectif d'une telle construction est de pouvoir réchauffer le produit desséchant avec l'élément chauffant utilisé pour les phases de lavage et de rinçage lors d'un cycle du lave-vaisselle.

Dans cette construction l'élément chauffant est en contact d'un côté avec le cylindre contenant le produit desséchant et de l'autre avec un tube d'écoulement contenant de l'eau. Le chauffage du produit desséchant n'est donc pas optimum car il n'est en contact avec l'élément chauffant que d'un côté et par ailleurs une bonne partie de l'énergie sert au chauffage du tube d'écoulement et à ce qu'il contient.

La présente invention a pour but de résoudre les inconvénients précités et de proposer d'une manière générale un procédé de séchage de la vaisselle contenue dans l'enceinte de lavage d'un lave-vaisselle en minimisant la consommation d'énergie et d'eau tout en améliorant les performances de séchage.

A cet effet, la présente invention vise un dispositif de séchage d'une machine à laver la vaisselle comprenant un boîtier renfermant une enceinte de lavage connecté à un circuit de traitement de l'air chargé en humidité et comportant au moins un ventilateur destiné à faire circuler ledit air entre une ouverture de captage et une ouverture d'évacuation, ledit circuit comportant un moyen d'assèchement de l'air à traiter comprenant une chambre contenant le dessiccant et un moyen de régénération du dessiccant.

Selon l'invention, la chambre comporte le moyen de régénération constitué d'au moins un élément chauffant en relation thermique avec le dessiccant, ladite chambre contenant deux nappes de dessiccant agencées parallèlement, et ledit au moins un élément chauffant étant agencé entre les deux nappes de dessiccant constituant un sandwich.

Ainsi, en ménageant un espace dans la chambre comportant le moyen de régénération, l'élément chauffant transmet intégralement la chaleur dissipée au dessiccant.

Le flux de chaleur dans la chambre traverse ainsi préférentiellement le dessiccant de telle sorte que l'échange thermique permettant la régénération du dessiccant contenu dans la chambre est amélioré.

Selon une caractéristique préférée de l'invention, l'élément chauffant est constitué par au moins une résistance électrique chauffante. Préférentiellement, la chambre contient deux nappes de dessiccant agencées parallèlement, ladite résistance électrique chauffante étant agencée entre les deux nappes.

Cette disposition des éléments chauffants noyés dans des dessiccants permet de réduire les pertes de chaleur et de garantir une montée en température du dessiccant plus efficace.

Selon une autre caractéristique préférée de l'invention, le dessiccant est constitué par des alumines activées.

Ce matériau a une capacité à se régénérer efficacement à une température moins élevée que d'autres dessiccants. Les alumines activées se déchargent plus rapidement que le gel de silice par exemple.

D'autres particularités et avantages de l'invention apparaîtront encore dans la description ci-après.

Aux dessins annexés, donnés à titre d'exemple, non limitatifs :
- la figure 1 est une vue en coupe longitudinale d'une machine à laver et sécher la vaisselle conforme à un mode de réalisation de l'invention ;
- la figure 2 est une vue en perspective de la chambre contenant le dessiccant ;
- la figure 3a est une vue en coupe longitudinale de la chambre contenant le dessiccant et un moyen de régénération placé au coeur du dessiccant ;
- la figure 3b est une vue en coupe longitudinale de la chambre contenant le dessiccant et un moyen de régénération placé en amont du dessiccant ;
- la figure 3c est une vue en coupe longitudinale de la chambre contenant le dessiccant et un moyen de régénération placé en aval du dessiccant ;
- la figure 4a est une vue en coupe longitudinale de la chambre contenant le dessiccant lors de la phase d'adsorption ;
- la figure 4b est une vue en coupe de la chambre contenant le dessiccant lors de la phase de régénération par convection naturelle ;
- la figure 4c est une vue en coupe de la chambre contenant le dessiccant lors de la phase de régénération par convection forcée ;
- la figure 5 est une vue en perspective de la chambre contenant le dessiccant présentant les dimensions de celle-ci ;
- la figure 6 est une vue en perspective du sandwich formé par des nappes de dessiccant et des moyens de chauffage ;
- la figure 7 est une vue en coupe de la chambre contenant le dessiccant illustrant le positionnement d'un sandwich formé par des nappes de dessiccant et des moyens de chauffage ;
- la figure 8 est une vue schématique en perspective d'une chambre de dessiccant assemblée sur une cuve de lavage d'une machine à laver et sécher la vaisselle conforme à un mode de réalisation de l'invention.

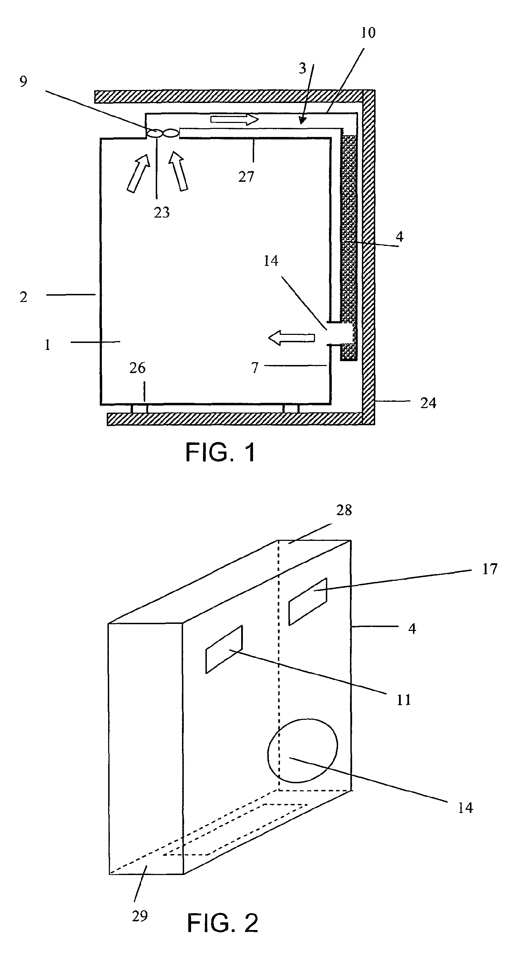

On va décrire tout d'abord un premier mode de réalisation de l'invention en référence aux figures 1 à 3a.

On a représenté pour décrire l'invention une enceinte de lavage 1 d'une machine à laver et sécher la vaisselle conforme à l'invention, montée en communication sur un circuit de ventilation d'air de séchage 3 représenté uniquement de manière schématique.

Bien entendu, l'ensemble est placé dans un boîtier 24 qui n'a pas besoin d'être décrit ici.

En outre, l'ensemble des autres moyens nécessaires au fonctionnement d'une machine à laver et sécher la vaisselle, tels que, par exemple, les moyens de commande, d'alimentation électrique et d'alimentation en eau, ne sont pas représentés ou décrits dès lors qu'ils peuvent être identiques à ceux bien connus de l'homme du métier dans ce domaine.

Cette machine à laver et sécher la vaisselle comprend tout d'abord une cuve de lavage 1, de forme sensiblement parallélépipédique. Cette cuve de lavage 1 peut comporter ainsi une paroi de fond 7, deux flancs de côté 25, une voûte 27, une sole 26 et une porte 2 permettant d'obturer la cuve de lavage 1.

Bien entendu, cette cuve de lavage 1 n'a pas besoin d'être de forme strictement parallélépipédique. Elle peut en particulier comporter dans ses parois des portions déportées formant ainsi des logements adaptés à contenir des organes de fonctionnement de la machine, tels que par exemple une motopompe destinée à la circulation de l'eau et positionnée dans la partie basse de la cuve de lavage 1.

Une machine à laver et sécher la vaisselle comporte également un circuit de traitement de l'air de séchage 3.

Ce circuit de traitement de l'air de séchage 3 comporte une gaine 10 montée à l'extérieur de la cuve de lavage 1 et mise en communication avec l'intérieur de la cuve de lavage 1.

Afin d'assurer la circulation de l'air de séchage dans cette gaine 10, un ventilateur 9 est monté dans la gaine 10 en un endroit approprié.

En outre, une chambre 4 contenant le dessiccant 5 est placée dans le circuit de traitement de l'air 3 à proximité d'un orifice 14 de sortie d'air de séchage placé dans le fond 7 de la cuve de lavage 1.

Ce dessiccant 5 peut être, de manière connue, un gel de silice ou des alumines activées permettant l'adsorption de la vapeur d'eau présente dans l'air de séchage.

Enfin, des moyens de chauffage 8 sont généralement placés dans la gaine 10 à proximité d'un orifice d'introduction d'air de séchage dans la cuve de lavage 1 afin d'assurer la régénération du dessiccant 5.

Ces différents moyens de traitement de l'air de séchage dans la gaine 10 de circulation d'air, constitués d'une chambre 4 contenant le dessiccant 5, d'un ventilateur 9 et de moyens de chauffage 8, sont seulement indiqués à titre non limitatif dans ce mode de réalisation.

On va décrire à présent plus particulièrement en référence à la figure 2, les orifices d'introduction de l'air de séchage à partir du circuit de traitement de l'air de séchage 3 qui débouchent dans la chambre 4 contenant le dessiccant 5.

La gaine 10 de circulation d'air de séchage débouche ainsi dans un orifice d'introduction d'air 11 ménagé sur une face externe de la chambre 4 de dessiccant 5.

Ici, et de manière nullement limitative, cet orifice d'introduction d'air 11 a la forme d'un parallélogramme.

Cet orifice d'introduction d'air 11 a pour fonction de faire entrer de l'air de la cuve de lavage 1.

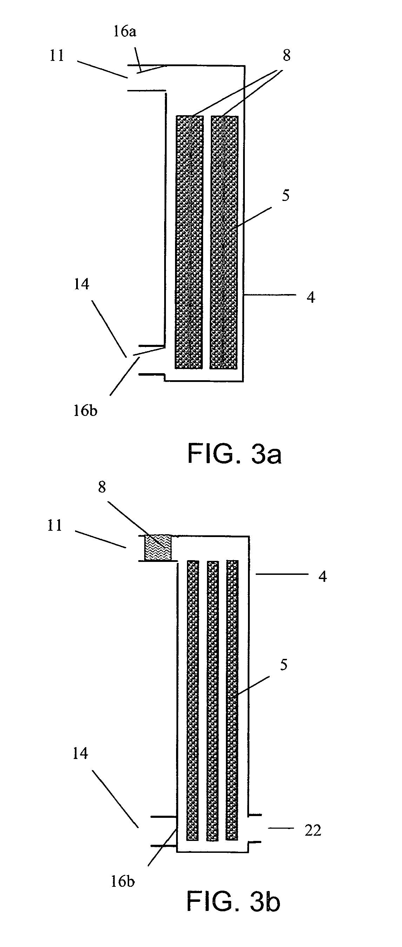

On va décrire à présent, en référence plus particulièrement à la figure 3a, la chambre 4 de dessiccant 5.

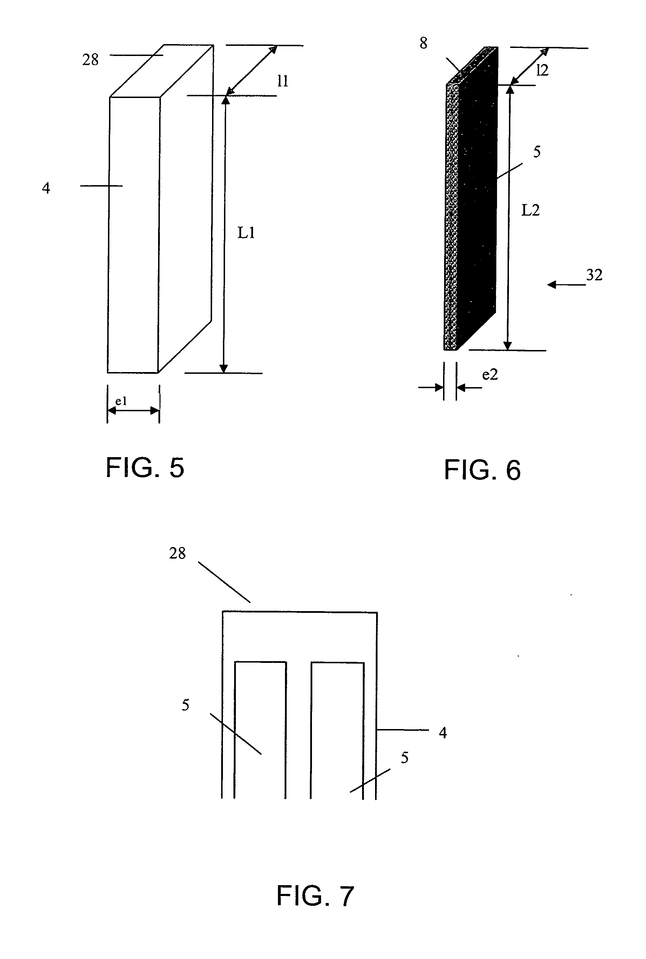

Par exemple, la chambre 4 de dessiccant 5 décrite dans ce mode de réalisation présente les dimensions suivantes : 650mm de hauteur L1, 300mm de profondeur I1 et 25mm d'épaisseur e1. Ces caractéristiques sont illustrées sur la figure 5.

Dans ce mode de réalisation, la chambre 4 est constituée de deux paires de nappes de dessiccant 5 agencées parallèlement.

Préférentiellement, les nappes de dessiccant 5 sont des alumines activées.

Ainsi, les nappes de dessiccant 5 sont contenues dans des boîtiers en inox perforé en contact thermique direct avec les moyens de chauffage 8. Par ailleurs, les liaisons entre les nappes de dessiccant 5 et les moyens de chauffage 8 sont réalisées par collage.

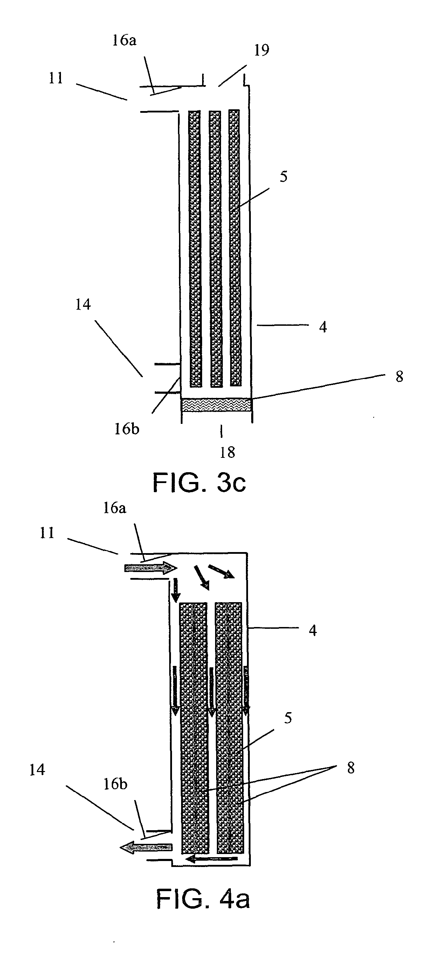

Dans le mode de réalisation tel qu'illustré à la figure 3, les moyens de chauffage 8 s'étendent au sein des nappes de dessiccant 5 de la chambre 4.

Les moyens de chauffage 8 comprennent deux cordons chauffants sous aluminium de 150W chacun de forme plate ou zigzag.

Ces cordons chauffants 8 s'étendent de telle sorte qu'ils sont agencés au contact des nappes de dessiccant 5.

Comme bien illustré sur la figure 6, cet assemblage de deux nappes de dessiccant 5 et des cordons de chauffage 8 placés entre les deux dites nappes de dessiccant forment un sandwich 32.

Par exemple, le sandwich 32 décrit dans ce mode de réalisation présente les dimensions suivantes : 600mm de hauteur L2, 290mm de profondeur 12 et 10mm d'épaisseur e2.

En outre, afin d'améliorer encore l'efficacité du séchage de la machine à laver et sécher la vaisselle, la chambre 4 de dessiccant 5 comporte un second sandwich 32 tel qu'illustré sur la figure 7. Ces nappes de dessiccant 5 s'étendent ainsi en direction de la chambre 4 de dessiccant 5. Elles s'interrompent à une distance relativement importante des faces du dessus 28 et du dessous 29 de la chambre 4.

La distance séparant la face du dessus 28 de la chambre 4 de dessiccant 5 de la face supérieure 31 du sandwich 32 peut être comprise entre 15 et 35mm, de préférence entre 20 et 30mm, et est de préférence égale à 25mm.

La distance entre ces deux surfaces permet d'assurer une bonne circulation d'air en entrée de la chambre 4 de dessiccant 5.

La distance séparant la face de la nappe dessiccant 5 de la chambre 4 qui lui fait face peut être comprise entre 1 et 5 mm, et de préférence égale à 1,5mm.

Ces nappes de dessiccant 5 sont ainsi disposées de manière à être alignées, leurs surfaces haute et basse sont dans un même plan.

Elles sont en outre disposées de telle sorte que, sur au moins une portion de leur longueur, elles se trouvent en vis-à-vis et à faible distance l'une de l'autre. Ces nappes de dessiccant 5 forment ainsi un obstacle permettant de ralentir le passage de l'air.

Par ailleurs, le nombre de sandwichs 32 pourrait être limité à un seul sandwich 32 ou au contraire supérieur à deux, afin d'adsorber une plus grande quantité d'humidité.

Ces deux cordons de chauffage 8 sont ainsi parallèles aux nappes de dessiccant 5. Les nappes de dessiccant 5 sont en outre disposées de telle sorte que, sur toute leur longueur, les moyens de chauffage 8 se trouvent en vis-à-vis et à faible distance l'un de l'autre.

Par ailleurs, le nombre de cordons chauffants 8 pourrait être limité à un seul cordon disposé entre les nappes de dessiccant 5 ou au contraire supérieur à deux, afin d'augmenter la température dans la chambre 4 de dessiccant 5.

Par exemple, l'épaisseur de nappes de dessiccant 5 est de 4mm et celle de l'élément chauffant 8 est de 2mm.

Les moyens de chauffage 8 peuvent aussi être placées à l'un des extrémités de la chambre 4 de dessiccant 5 tel qu'illustré sur les figures 3b et 3c. Ces réalisations peuvent être envisagées pour des réductions de coût de réalisation de la chambre 4 de dessiccant 5.

Afin d'optimiser la régénération du dessiccant 5, le flux d'air traversant la chambre 4 de dessiccant 5 est suffisamment élevé pour permettre d'évacuer l'humidité dégagée par la désorption et pas trop puissant pour limiter les pertes de chaleur dans la chambre 4 de dessiccant 5. Le but est de stabiliser la température dans la chambre 4 de dessiccant 5 entre 80 et 100°C. Ces conditions sont bien remplies en utilisant un débit d'air inférieur à 10m³/h et plus précisément de l'ordre de 5m³/h pendant la phase de régénération.

On va décrire à présent, en référence plus particulièrement à la figure 3a, les orifices de sortie de l'air de séchage à partir de la chambre 4 contenant le dessiccant 5 qui débouchent dans le circuit 3 de traitement de l'air de séchage.

La sortie préférentielle 14 de l'air par le fond 7 de la cuve de lavage 1 permet d'accroître la quantité d'air traversant l'intégralité de la cuve de lavage 1 du fond 7 de la cuve 1 au plafond 27 de la cuve. L'échange entre l'air de séchage et la vaisselle est ainsi amélioré.

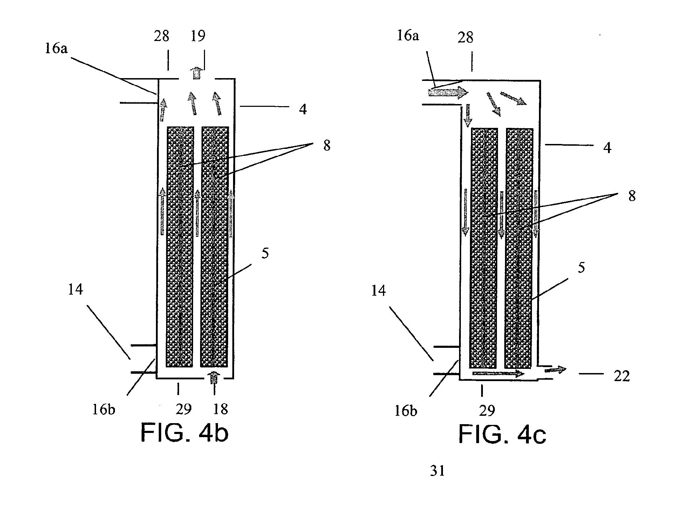

Comme bien illustré sur la figure 4b par les flèches illustrant le cheminement principal de l'air de régénération au travers de la chambre 4 de dessiccant 5, l'air circule de préférence du fond 29 de la chambre 4 de dessiccant 5 grâce à la disposition de l'orifice d'introduction d'air de l'extérieur 18 vers le haut 28 de la chambre 4 de dessiccant 5 grâce à la disposition de l'orifice de sortie d'air 19 par convection naturelle. Ce sens de circulation correspond à la phase de régénération du dessiccant 5.

Ce principe de circulation d'air dans la chambre 4 de dessiccant 5 lors de la phase de régénération du dessiccant 5 peut encore être amélioré dans un second mode de réalisation tel qu'illustré à la figure 4c.

Les éléments communs au premier mode de réalisation tel qu'illustré aux figures 1, 2 et 4b, et portant les mêmes références numériques ne seront pas décrits de nouveau.

Dans ce second mode de réalisation, le circuit de traitement de l'air de séchage 3 comporte un second moyen de traitement de l'air de séchage disposé sur le plafond 27 de la cuve de lavage 1.

Le circuit de traitement de l'air de séchage 3 comporte une seconde gaine 10 montée à l'extérieur de la cuve de lavage 1 et mise en communication avec l'extérieur du lave-vaisselle.

Afin d'assurer la circulation de l'air de régénération dans cette seconde gaine 10, un ventilateur 31 est monté dans la gaine 10 en un endroit approprié.

La gaine 10 de circulation d'air de régénération débouche dans un orifice d'introduction d'air 17 ménagé sur la même face externe comportant l'orifice d'introduction d'air 11 de la chambre 4 de dessiccant 5 tel qu'illustré sur la figure 2.

Ici et de manière nullement limitative, cet orifice d'introduction d'air 17 a la forme d'un parallélogramme.

Cet orifice d'introduction d'air 17 a pour fonction de faire entrer de l'air de l'ambiance extérieure.

Dans ce mode de réalisation, les clapets 16a et 16b sont adaptés à obturer la communication de l'ouverture d'entrée d'air 11 et de l'ouverture de sortie d'air 14 entre la cuve de lavage 1 et la chambre 4 contenant le dessiccant 5 du circuit de traitement de l'air de séchage 3 tel que décrit dans le mode de réalisation précédent illustré en figure 4b.

Ainsi, comme bien illustré sur la figure 4c par les flèches montrant le cheminement principal de l'air de régénération au travers de la chambre 4 de dessiccant 5, l'air circule de préférence du haut 28 de la chambre 4 de dessiccant 5 grâce à la disposition de l'orifice d'introduction d'air de l'extérieur 17 vers le bas 29 de la chambre 4 de dessiccant 5 grâce à la disposition de l'orifice de sortie d'air 22 par convection forcée.

Nous allons décrire à présent en référence à la figure 3b, une variante des modes de réalisation précédents.

Les éléments identiques aux premier et second mode de réalisation, et portant les mêmes références numériques, ne seront pas décrits de nouveau.

Dans ce mode de réalisation, des moyens de chauffage 8 sont agencés à l'entrée 17 de la chambre 4 de dessiccant 5.

A cet effet, la seconde gaine 10 de circulation d'air provenant de l'extérieur du lave-vaisselle est en contact avec les moyens de chauffage 8 de manière à chauffer l'air circulant sur les nappes de dessiccant 5 lors de la phase de régénération par convection forcée.

De préférence, les moyens de chauffage 8 sont disposés dans la partie haute 28 de la chambre 4 de dessiccant 5 comme illustré à la figure 3b.

Ces moyens de chauffage 8 servent pendant la phase de régénération des nappes de dessiccant 5 et ont pour fonction de monter en température la chambre 4 de dessiccant 5 pendant la phase de régénération.

Nous allons décrire à présent en référence à la figure 3c, une variante des modes de réalisation précédents.

Les éléments identiques au premier mode de réalisation, et portant les mêmes références numériques, ne seront pas décrits de nouveau.

Dans ce mode de réalisation, les moyens de chauffage 8 sont agencés à l'entrée de l'orifice d'introduction d'air de l'extérieur 18 de la chambre 4 de dessiccant 5.

De préférence, les moyens de chauffage 8 sont disposés dans la partie basse 29 de la chambre 4 de dessiccant 5 comme illustré à la figure 3b.

Deux clapets 16a, 16b sont montés dans le circuit de traitement de l'air de séchage 3. Ces clapets 16a, 16b peuvent occuper deux positions dans ce mode de réalisation. Dans une première position du clapet 16a, l'orifice d'introduction d'air 11 est mis en communication avec le circuit de traitement de l'air de séchage 3. Cette première position du clapet 16a correspond à la position ouverte. De même pour le clapet 16b, l'orifice de sortie d'air 14 est mis en communication avec la cuve de lavage 1. Cette première position du clapet 16b correspond à la position ouverte.

Dans la position illustrée en trait plein sur la figure 4b, les clapets 16a, 16b sont adaptés à obturer sensiblement la communication d'air entre la cuve de lavage 1 et la chambre 4 de dessiccant 5.

Ainsi, dans cette seconde position, les clapets 16a, 16b permettent d'isoler la chambre 4 de dessiccant 5 du circuit de traitement de l'air de séchage 3.

Ainsi, les nappes de dessiccant 5 saturées en humidité de la chambre 4 de dessiccant 5 peuvent être régénérées avant d'être utilisées pour adsorber l'humidité de l'air de la cuve de lavage 1 lors d'un prochain cycle de lavage de la vaisselle.

Dans cette position, le ventilateur 9 est arrêté de telle sorte qu'aucun flux d'air ne puisse entrer dans la chambre 4 de dessiccant 5 par l'orifice d'introduction d'air 11.

En outre, une entrée d'air ambiant 18 et une sortie d'air 19 vers l'extérieur sont ménagées dans la chambre 4 de dessiccant 5.

Ainsi, le dessiccant 5 est régénéré par convection naturelle avec un flux d'air provenant de l'extérieur.

Dans une première position, qui correspondrait à une position horizontale des clapets 16a, 16b sur les figures 3a et 4a, la cuve de lavage 1 et la chambre 4 de dessiccant 5 sont mises en communication l'une avec l'autre de telle sorte que les orifices 11 et 14 peuvent être mis en communication avec le circuit de traitement de l'air de séchage 3.

Cette disposition des clapets 16a et 16b permet de faire circuler l'air entre la chambre 4 de dessiccant 5 et la cuve de lavage 1. Les orifices 18 et 19 ne sont pas bouchés pendant la phase de séchage de la vaisselle contenue dans la cuve de lavage 1. Lesdits orifices 18 et 19 servent aussi à la phase de régénération des nappes de dessiccant 5.

Les clapets 16a et 16b peuvent ainsi être placés dans l'une ou l'autre de ces positions lors d'un cycle de séchage de la vaisselle.

En particulier, un procédé de séchage et ses différentes phases peuvent être mis en oeuvre après une phase de lavage d'un cycle de lavage de la vaisselle.

Ainsi, lors de la mise en oeuvre d'un procédé de séchage, ce procédé de séchage peut comporter tout d'abord une phase de séchage pendant laquelle les clapets 16a et 16b montés dans le circuit de traitement de l'air de séchage 3 sont placés dans leur première position. Ladite première position pour les deux clapets 16a et 16b correspond à une position dans laquelle l'orifice d'introduction d'air 11 débouchant dans la chambre 4 de dessiccant 5 et l'orifice de sortie d'air 14 sont mis en communication avec le circuit de traitement de l'air de séchage 3.

Dans cette position, le passage de l'air de séchage sur le dessiccant est favorisé pour l'adsorption de l'humidité contenue dans l'air. Ce type de circulation est particulièrement avantageux lorsque l'air de la cuve de lavage 1 est saturé en vapeur d'eau, tel est le cas après une phase de rinçage de la vaisselle, en fin de cycle de lavage.

Cette phase du procédé de séchage illustrée à la figure 4a correspond à la phase d'adsorption de la vapeur d'eau de la cuve de la cuve de lavage 1 par les nappes de dessiccant 5.

Pendant cette phase de séchage, l'air est recyclé par le circuit de traitement de l'air 3 dans sa quasi-totalité. Un orifice d'apport d'air 30 non chargé en humidité est ménagé dans la partie basse d'un des côtés 25 de la cuve de lavage 1 pour améliorer les performances de séchage de la vaisselle. Cet orifice d'apport d'air peut être aussi dans la contre-porte du lave-vaisselle.

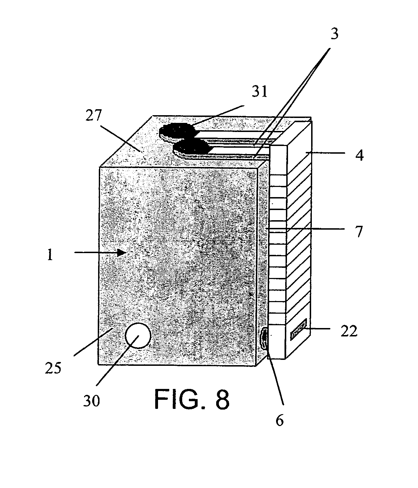

Cet apport d'air non chargé en humidité est introduit de préférence dans le circuit de traitement de l'air de séchage 3 par effet venturi soit à l'aide d'un second ventilateur 31 monté dans une seconde gaine de ventilation en un endroit approprié tel qu'illustré sur la figure 8.

La proportion de l'air provenant de l'extérieur par rapport au volume d'air humide de l'enceinte de lavage est de l'ordre de 30%.

Un orifice de sortie d'air 22 est ménagé dans la chambre 4 de dessiccant 5 pour évacuer une partie de l'air en recirculation dans le circuit de traitement de séchage 3.

Cet orifice de sortie d'air 22 sera plus largement décrit dans la suite du présent document.

Dans la phase de régénération, les clapets 16a et 16b sont placés dans une seconde position telle qu'illustrée sur la figure 4b, c'est-à-dire dans une position où la cuve de lavage 1 est isolée du circuit de traitement de l'air de séchage. Dans cette seconde position des clapets 16a et 16b, l'air de régénération traversant la chambre 4 de dessiccant 5 sort préférentiellement vers l'extérieur de la machine à laver et sécher la vaisselle.

Cette phase de régénération nécessite une entrée d'air ambiant 18 et une sortie d'air 19 vers l'extérieur ménagées dans la chambre 4 de dessiccant 5 afin de permettre à l'air de circuler au travers de la chambre 4 de dessiccant 5.

Cette étape de régénération naturelle du dessiccant 5 consiste en deux étapes.

La première étape de régénération du dessiccant 5, la régénération naturelle, s'effectue entre deux cycles de lavage de la vaisselle.

La durée nécessaire à la régénération du dessiccant par convection naturelle est de l'ordre de 23 heures. Pendant cette étape, les éléments chauffants 8 ne sont pas en fonctionnement.

Cette étape ne consomme aucune énergie et permet aux nappes de dessiccant de se régénérer partiellement.

Une seconde étape consiste à mettre en fonctionnement les éléments chauffants 8 pendant la phase de lavage du cycle suivant.

Afin de diminuer la durée de régénération des nappes de dessiccant 5, un second procédé de séchage peut être mis en place pour réaliser une régénération par convection forcée.

On va décrire à présent ce second procédé de séchage de la vaisselle dans une machine à laver et sécher la vaisselle conforme à l'invention.

Ce procédé de séchage reprend la première phase de séchage à l'identique.

Dans la seconde phase de régénération, les clapets 16a et 16b sont dans ladite seconde position correspondant à la fermeture des orifices d'introduction d'air 11 et de sortie d'air 14 du circuit de traitement de l'air de séchage 3.

Un apport d'air non chargé en humidité est prévu afin de régénérer les nappes dessiccant 5 par un orifice d'introduction d'air 17.

Cette disposition des clapets 16a et 16b permet d'isoler la chambre 4 de dessiccant 5 de la cuve de lavage 1 et l'arrivée d'air par l'orifice d'introduction d'air 17 donne la possibilité de régénérer les nappes dessiccant 5 par convection forcée.

Ainsi, l'air de régénération est introduit dans la chambre 4 de dessiccant 5 par l'orifice d'introduction d'air 17. Cet air provient de l'extérieur afin de ne pas charger les nappes de dessiccant 5 avec de l'humidité. Cet air de l'extérieur est aspiré par le ventilateur 9 et traverse la chambre 4 de dessiccant 5 pour ressortir par un orifice de sortie d'air 22 ménagé dans le fond 13 de la chambre 4 de dessiccant 5.

Cet orifice de sortie d'air 22 peut aussi être disposé sur une paroi verticale de la chambre 4 de dessiccant 5.

Cette deuxième phase de régénération peut être réalisée pendant le cycle de lavage.

Lors de la phase de rinçage chaud d'un cycle de lavage de la vaisselle dans un lave-vaisselle ne comprenant pas un dispositif de séchage par dessiccation, une période de chauffe importante et à une température élevée de l'ordre de 65 à 75°C est nécessaire pour obtenir des résultats de séchage satisfaisants.

Ce niveau de température est nécessaire pour assurer que l'eau s'évapore suffisamment pendant la période de séchage car l'air qui est recirculé dans l'enceinte de lavage 1 est constamment chargé en humidité.

Avec un dispositif de séchage comprenant une chambre 4 de dessiccant 5 tel que décrite précédemment, la température de chauffe de la structure de la machine, de la vaisselle et du bain est plus faible.

L'air recirculé dans l'enceinte de lavage 1 est asséché par le dessiccant 5 lors de la circulation dudit air par la chambre 4 de dessiccant 5 et permet de sécher la vaisselle plus efficacement à une température plus faible.

On peut constater que le fonctionnement du dispositif de séchage par dessiccation peut être utilisé jusqu'à une température de 15°C sans détériorer les performances de séchage.

Toutefois, l'utilisation de liquides de rinçage connus actuellement ne permet pas de diminuer la température de chauffe dans la cuve de lavage 1 au-delà de 45°C tout en conservant des résultats de séchage identiques. En effet, cette température de chauffage de la cuve de lavage, de la vaisselle et du bain est nécessaire pour assurer que le liquide de rinçage ne mousse pas dans l'eau contenue dans le bain.

Les moyens de chauffage mis en fonctionnement pendant la phase de rinçage chaud sont indépendants des éléments chauffants 8 placés dans la chambre 4 de dessiccant 5.

Pendant la phase de séchage, les éléments chauffants 8 ne sont pas mis en fonctionnement. Les nappes de dessiccants 5 adsorbent l'humidité sans nécessiter un apport de chaleur par les éléments chauffants 8. De même, les moyens de chauffage de la vaisselle contenue dans la cuve de lavage 1 ne sont pas mis en fonctionnement. L'apport de chaleur transmis par l'eau de rinçage chaud est emmagasiné par la vaisselle et suffit à l'évaporation de ladite eau de rinçage pendant la phase de séchage.

La phase de régénération par convection forcée s'effectue pendant la phase de lavage du cycle suivant.

Ainsi, le chauffage du dessiccant 5 dans la chambre 4 se fait en même temps que le chauffage de la vaisselle dans la cuve de lavage 1.

De telle sorte que les déperditions de chaleur pendant le chauffage de la vaisselle dans la cuve de lavage 1 peuvent être utilisées pour chauffer et régénérer le dessiccant 5 dans la chambre 4.

Ainsi, la durée et la température de séchage peuvent être réduites, de telle sorte que la consommation énergétique en électricité est diminuée. Le gain énergétique mesuré lors d'essais de validation de l'invention est de 170Wh sur un cycle de lavage et de séchage.

Bien entendu, de nombreuses modifications peuvent être apportées aux exemples de réalisation décrits ci-dessus sans sortir du cadre de l'invention.

Ces différents moyens de traitement de l'air de séchage dans la gaine 10 de circulation d'air, constitués d'une chambre 4 contenant le dessiccant 5, d'un ventilateur 9 et de moyens de chauffage 8, sont seulement indiqués à titre non limitatif dans ce mode de réalisation.

Notamment, le positionnement des moyens de chauffage 8 peut être différent des modes de réalisation décrits.

## Revendications

1. Dispositif de séchage d'une machine à laver la vaisselle comprenant un boîtier (22) renfermant une enceinte de lavage (1) connecté à un circuit de traitement de l'air (3) chargé en humidité et comportant au moins un ventilateur (9) destiné à faire circuler ledit air entre une ouverture de captage (23) et une ouverture d'évacuation (14), ledit circuit comportant un moyen d'assèchement de l'air à traiter comprenant une chambre (4) contenant le dessiccant (5) et un moyen de régénération (8) du dessiccant (5), **caractérisé en ce que** ladite chambre (4) comporte le moyen de régénération constitué d'au moins un élément chauffant (8) en relation thermique avec le dessiccant (5), ladite chambre (4) contenant deux nappes de dessiccant (5) agencées parallèlement, et ledit au moins un élément chauffant (8) étant agencé entre les deux nappes de dessiccant (5) constituant un sandwich (32).

2. Dispositif de séchage d'une machine à laver la vaisselle selon la revendication 1, **caractérisé en ce que** le moyen de régénération (8) est constitué par au moins une résistance électrique chauffante.

3. Dispositif de séchage d'une machine à laver la vaisselle selon la revendication 1, **caractérisé en ce que** le dessiccant (5) est constitué par des alumines activées.

4. Dispositif de séchage d'une machine à laver la vaisselle selon la revendication 1, **caractérisé en ce que** le dessiccant (5) est constitué par un gel de silicate.

5. Dispositif de séchage d'une machine à laver la vaisselle selon la revendication 1, **caractérisé en ce que** la résistance électrique chauffante (8) est collée aux deux nappes de dessiccant (5).

6. Dispositif de séchage d'une machine à laver et sécher la vaisselle selon la revendication 1, **caractérisé en ce que** la chambre (4) comporte plusieurs sandwiches (32)

7. Dispositif de séchage d'une machine à laver et sécher la vaisselle selon l'une quelconque des revendications 1 à 6, **caractérisé en ce que** deux clapets (16a), (16b) sont montés dans le circuit de traitement de l'air de séchage 3 entre une première position desdits clapets (16a) et (16b) dans laquelle l'orifice d'introduction d'air (11) et l'orifice de sortie d'air (14) sont mis en communication avec l'enceinte de lavage (1) et une seconde position dans laquelle la chambre (4) de dessiccant (5) est isolée du circuit de traitement de l'air de séchage (3) et l'enceinte de lavage (1).

8. Dispositif de séchage d'une machine à laver et sécher la vaisselle selon la revendication 7, **caractérisé en ce que** les clapets (16a) et (16b) sont dans ladite seconde position correspondant à la fermeture des orifices d'introduction d'air (11) et de sortie d'air (14) du circuit de traitement de l'air de séchage (3) isolant la chambre (4) de dessiccant (5), et où l'air de séchage provenant de l'extérieur est introduit dans la chambre (4) de dessiccant (5) par l'orifice d'introduction d'air (17).

9. Dispositif de séchage d'une machine à laver et sécher la vaisselle selon l'une quelconque des revendications précédentes, **caractérisé en ce que** le débit d'air circulant dans la chambre 4 de dessiccant 5 pendant la phase de régénération est inférieur à 10m³/h.

10. Dispositif de séchage d'une machine à laver et sécher la vaisselle selon la revendication 9, **caractérisé en ce que** le débit d'air circulant dans la chambre 4 de dessiccant 5 pendant la phase de régénération est de l'ordre de 5m³/h.

11. Procédé de séchage de la vaisselle mis en oeuvre dans une machine à laver et sécher la vaisselle incorporant un dispositif conforme à la revendication 7, **caractérisé en qu'**il comprend une phase de régénération des nappes de dessiccant réalisée en deux étapes :
• une première étape dans laquelle lesdits clapets (16a) et (16b) sont placés dans une position telle que la chambre (4) de dessiccant (5) est isolée de la cuve de lavage (1) et dans laquelle une entrée d'air ambiant (18) et une sortie d'air (19) vers l'extérieur sont ménagées dans la chambre (4) de dessiccant (5), ladite première étape étant effectuée entre deux cycles de lavage la vaisselle par convection naturelle sans fonctionnement des éléments chauffants (8),
• une deuxième étape dans laquelle lesdits clapets (16a) et (16b) sont placés dans une position telle que la chambre (4) de dessiccant (5) est isolée de la cuve de lavage (1) et dans laquelle un orifice d'introduction d'air (17) permet l'apport d'air non chargé en humidité, ladite deuxième étape étant effectuée pendant le cycle de lavage suivant par convection forcée et avec le fonctionnement des éléments chauffants (8).

## Claims

1. Drying device of a dish washing machine containing a box (22) enclosing a washing cabinet (1) connected to a circuit for processing humid air (3) and including at least one fan (9) intended to circulate said air between an intake opening (23) and an outlet opening (14), said circuit containing a means of drying the air to be processed consisting of a chamber (4) containing the desiccant (5) and a means of regenerating (8) the desiccant (5), **characterised in that** said chamber (4) contains the regeneration means consisting of at least one heating element (8) in thermal communication with the desiccant (5), said chamber (4) containing two desiccant (5) layers arranged in parallel, and said at least one heating element (8) being arranged between the two desiccant (5) layers forming a sandwich (32).

2. Drying device of a dish washing machine according to claim 1, **characterised in that** the regeneration means (8) consists of at least one electrical heating resistor.

3. Drying device of a dish washing machine according to claim 1, **characterised in that** the desiccant (5) consists of activated alumina.

4. Drying device of a dish washing machine according to claim 1, **characterised in that** the desiccant (5) consists of a silicate gel.

5. Drying device of a dish washing machine according to claim 1, **characterised in that** the electrical heating resistor (8) is stuck to the two desiccant (5) layers.

6. Drying device of a dish washing and drying machine according to claim 1, **characterised in that** the chamber (4) contains several sandwiches (32).

7. Drying device of a dish washing and drying machine according to any of claims 1 to 6, **characterised in that** two valves (16a), (16b), are mounted in the drying air processing circuit 3 between a first position of said valves (16a) and (16b) in which the air introduction orifice (11) and the air outlet orifice (14) are connected with the washing cabinet (1) and a second position in which the desiccant (5) chamber (4) is isolated from the drying air processing circuit (3) and the washing cabinet (1).

8. Drying device of a dish washing and drying machine according to claim 7, **characterised in that** the valves (16a) and (16b) are in said second position corresponding to the closure of the air introduction (11) and air outlet (14) orifices of the drying air processing circuit (3) isolating the desiccant (5) chamber (4), and where the drying air coming from outside is introduced into the desiccant (5) chamber (4) through the air introduction orifice (17).

9. Drying device of a dish washing and drying machine according to any of the previous claims, **characterised in that** the air flow circulating in the desiccant 5 chamber 4 during the regeneration phase is lower than 10m³/h.

10. Drying device of a dish washing and drying machine according to claim 9, **characterised in that** the air flow circulating in the desiccant 5 chamber 4 during the regeneration phase is around 5m³/h.

11. Dish drying method implemented in a dish washing and drying machine incorporating a device compliant with claim 7, **characterised in that** it includes a regeneration phase for the desiccant layers, produced in two stages:
• a first stage in which said valves (16a) and (16b) are placed in a position such that the desiccant (5) chamber (4) is isolated from the washing tank (1) and in which an ambient air inlet (18) and an air outlet (19) to the outside are placed in the desiccant (5) chamber (4), said first stage being carried out between two dish washing cycles by natural convection without operation of the heating elements (8),
• a second stage in which said valves (16a) and (16b) are placed in a position such that the desiccant (5) chamber (4) is isolated from the washing tank (1) and in which an air introduction orifice (17) allows non-humid air to be provided, said second stage being carried out during the following washing cycle by forced convection and with the operation of the heating elements (8).

## Patentansprüche

1. Vorrichtung zum Trocknen in einer Geschirrspülmaschine, bestehend aus einem Gehäuse (22) in dem sich ein Waschbereich (1) befindet, der an einen Kreislauf zur Aufbereitung feuchtigkeitsgeladener Luft (3) angeschlossen ist und mindestens einen Ventilator (9) umfasst, der die Luft zwischen einer Öffnung für die Luftzufuhr (23) und einer Öffnung für den Luftabzug (14) umwälzen soll, wobei dieser Kreislauf ein Mittel zur Trocknung der aufzubereitenden Luft enthält, das eine Kammer (4) umfasst, die das Trocknungsmittel (5) und ein Mittel zur Regenerierung (8) des Trocknungsmittels (5) enthält, **dadurch gekennzeichnet, dass** die Kammer (4) ein Regeneriermittel enthält, das aus mindestens einem Heizelement (8) besteht, das über Wärme mit dem Trocknungsmittel (5) verbunden ist, wobei die Kammer (4) zwei Lagen Trocknungsmittel (5) enthält, die parallel ausgerichtet sind und das mindestens einfach vorhandene Heizelement (8) zwischen den beiden Lagen des Trocknungsmittels (5) angeordnet ist, die ein Sandwich (32) darstellen.

2. Trocknungsvorrichtung einer Geschirrspülmaschine nach Anspruch 1, **dadurch gekennzeichnet, dass** das Regeneriermittel (8) aus mindestens einem elektrischen Heizwiderstand besteht,

3. Trocknungsvorrichtung einer Geschirrspülmaschine nach Anspruch 1, **dadurch gekennzeichnet, dass** das Trocknungsmittel (5) aus aktivierter Tonerde besteht.

4. Trocknungsvorrichtung einer Geschirrspülmaschine nach Anspruch 1, **dadurch gekennzeichnet, dass** das Trocknungsmittel (5) aus Silikatgel besteht.

5. Trocknungsvorrichtung einer Geschirrspülmaschine nach Anspruch 1, **dadurch gekennzeichnet, dass** der elektrische Heizwiderstand (8) an zwei Lagen Trocknungsmittel (5) angeklebt ist.

6. Trocknungsmittel einer Maschine zum Spülen und Trocknen von Geschirr nach Anspruch 1, **dadurch gekennzeichnet, dass** die Kammer (4) aus mehreren Sandwich (32) besteht.

7. Vorrichtung zum Trocknen einer Maschine zum Spülen und Trocknen von Geschirr nach einem der Ansprüche 1 bis 6, **dadurch gekennzeichnet, dass** sich im Kreislauf zur Aufbereitung der Trocknungsluft 3 zwei Ventile (16a), (16b) zwischen einer ersten Position dieser Ventile (16a) und (16b) befinden, in der die Öffnung des Lufteinlasses (11) und die Öffnung der Luftableitung (14) mit der Spüleinheit (1) in Verbindung stehen und einer zweiten Position, in der die Kammer (4) des Trocknungsmittels (5) vom Aufbereitungskreislauf der Trocknungsluft (3) und der Spüleinheit (1) getrennt ist,

8. Trocknungsvorrichtung einer Maschine zum Spülen und Trocknen von Geschirr nach Anspruch 7, **dadurch gekennzeichnet, dass** die Ventile (16a) und (16b) sich in der zweiten Position befinden, die dem Verschluss der Öffnungen für den Lufteinlass (11) und der Luftableitung (14) des Kreislaufs zur Aufbereitung der Trocknungsluft (3) entspricht und die Kammer (4) des Trocknungsmittels (5) isoliert und in der die Trocknungsluft von außen durch die Öffnung für den Lufteinlass (17) in die Kammer (4) des Trocknungsmittels (5) geführt wird.

9. Trocknungsvorrichtung einer Maschine zum Spülen und Trocknen von Geschirr nach einem der vorstehenden Ansprüche, **dadurch gekennzeichnet, dass** der Luftfluss in der Kammer 4 des Trocknungsmittels 5 während der Regenerierphase unter 10 m³/Std. liegt,

10. Trocknungsvorrichtung einer Maschine zum Spülen und Trocknen von Geschirr nach Anspruch 9, **dadurch gekennzeichnet, dass** der Luftfluss in der Kammer 4 des Trocknungsmittels 5 während der Regenerierphase in der Größenordnung 5 m³/Std. liegt,

11. Verfahren zum Trocknen von Geschirr, das in einer Maschine zum Spülen und Trocknen von Geschirr angewandt wird, die eine Vorrichtung nach Anspruch 7 enthält, **dadurch gekennzeichnet, dass** es eine Phase zur Regenerierung der Lagen des Trocknungsmittels umfasst, die in zwei Etappen durchgeführt wird:
• einer ersten Etappe, in der die Ventile (16a) und (16b) sich in einer derartigen Position befinden, dass Kammer (4) des Trocknungsmittels (5) vom Spülraum (1) getrennt ist und in der ein Einlass der Umgebungsluft (18) und ein Luftaustritt (19) nach außen in der Kammer (4) des Trocknungsmittels (5) angebracht sind, wobei die erste Etappe zwischen zwei Geschirrspülzyklen durch natürliche Konvektion ohne Betrieb der Heizelemente (8) durchgeführt wird,
• einer zweiten Etappe, in der die Ventile (16a) und (16b) sich in einer derartigen Position befinden, dass die Kammer (4) des Trocknungsmittels (5) von dem Spülraum (1) getrennt ist und in der eine Lufteinlassöffnung (17) die Zufuhr nicht feuchtigkeitsgeladener Luft ermöglicht, wobei diese zweite Phase während des folgenden Spülzyklus durch Umluft und bei Betrieb der Heizelemente (8) durchgeführt wird.
